# EUROPEAN PATENT APPLICATION

(11) **EP 2 665 170 A1**
(43) Date of publication of application: **20.11.2013**
(21) Application number: 13167096.0
(22) Date of filing: 08.05.2013
(51) Int. Cl.: H02M 1/12, H02M 7/493, H02M 7/5387

(54) **System and method of parallel converter current sharing**

(30) Priority: 14.05.2012 US 201213470550
(71) Applicant: General Electric Company, Schenectady, New York 12345 (US)
(72) Inventor: Wagoner, Robert Gregory, Salem, Virginia 25143 (US); Frame, Scott Charles, Salem, Virginia 24153 (US); Zhu, Huibin, Salem, Virginia 24153 (US); Xu, Chunchun, Salem, Virginia 24153 (US)
(74) Representative: Bedford, Grant Richard

(57) **Abstract**

In one aspect, a method of converting power is described. One embodiment of the method comprises receiving direct current (DC) power; channeling the DC power through an inverter 110 including a first bridge 210 and a second bridge 212, wherein each of the first bridge and the second bridge includes at least one switch 202; controlling the at least one switch 202 of the first bridge 210 and the at least one switch of the second bridge 212 to convert the DC power to alternating current (AC) power; and, channeling the AC power through an inductor 226 that includes a first winding and a second winding, wherein the first winding is coupled to an output of the first bridge and the second winding is coupled to an output of the second bridge and wherein the inductor 226 is configured to have a first magnetic path for common mode inductance and a second magnetic path for differential mode inductance.

## Description

The subject matter described herein relates generally to power systems and, more particularly, to a power generation system, a power converter system, and systems and methods of parallel converter current sharing.

In some known renewable energy power systems, direct current (DC) electrical power is generated from at least one renewable energy source or generated alternating current (AC) electrical power is inverted to DC electrical power and then converted back to AC. Such renewable energy sources may include wind, solar, geothermal, hydro, biomass, and/or any other renewable energy source. To properly couple such power systems to an electrical grid, the DC electrical power must be converted to AC. At least some known power systems use a power converter to convert DC power to AC power. In some instances, the converter can be a parallel converter.

Such conversion from DC power to AC power typically produces one or more variations in the voltage and/or current components of the AC power generated. For example, current between parallel converters may not be balanced or there may be high frequency currents induced that flow between the converters. Therefore, embodiments of systems and methods that overcome challenges in the art, some of which are described above, are desired.

In one aspect according to the present invention, a method of converting power is described. One embodiment of the method comprises receiving direct current (DC) power; channeling the DC power through an inverter including a first bridge and a second bridge, wherein each of the first bridge and the second bridge includes at least one switch; controlling the at least one switch of the first bridge and the at least one switch of the second bridge to convert the DC power to alternating current (AC) power; and, channeling the AC power through an inductor that includes a first winding and a second winding, wherein the first winding is coupled to an output of the first bridge and the second winding is coupled to an output of the second bridge and wherein the inductor is configured to have a first magnetic path for common mode inductance and a second magnetic path for differential mode inductance.

In another aspect, another embodiment of converting power is described. This embodiment of the method comprises receiving direct current (DC) power; channeling the DC power through an inverter including a first bridge and a second bridge, wherein each of the first bridge and the second bridge includes at least one switch; controlling the at least one switch of the first bridge and the at least one switch of the second bridge to convert the DC power to alternating current (AC) power by causing the at least one switch of the first bridge to be switched with a first duty cycle and to cause the at least one switch of the second bridge to be switched with a second duty cycle that is different from the first duty cycle, the controlling performed by a control system that comprises at least a first current sensor coupled to a first current feedback control loop, the first current feedback control loop having a first current regulator that actively adjusts the first duty cycle and the second duty cycle; and channeling the AC power through an inductor that includes a first winding and a second winding, wherein the first winding is coupled to an output of the first bridge and the second winding is coupled to an output of the second bridge.

In yet another aspect, a power converter system is described. One embodiment of the system comprises an inverter comprising a first bridge and a second bridge, wherein each of the first bridge and the second bridge comprise at least one switch; an inductor comprising a first winding coupled to an output of the first bridge; and a second winding coupled to an output of the second bridge; and a control system coupled to the inverter, the control system configured to cause the at least one switch of the first bridge to be switched with a first duty cycle and to cause the at least one switch of the second bridge to be switched with a second duty cycle, wherein the first duty cycle is different from the second duty cycle, the control system comprising at least a first current sensor coupled to a first current feedback control loop, the first current feedback control loop having a first current regulator that actively adjusts the first duty cycle and the second duty cycle.

Various advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

The accompanying drawings, which are incorporated in and constitute a part of this specification, illustrate embodiments and together with the description, serve to explain the principles of the methods and systems:
FIG. 1 is a schematic diagram of an exemplary power generation system;
FIG. 2 is a schematic diagram of a portion of an exemplary power converter system that may be used with the power generation system shown in FIG. 1;
FIGS. 3A, 3B and 3C illustrate three examples of core and winding configurations for an inductor that may be used with the power generation system shown in FIG. 1;
FIG. 4 is a schematic diagram of a portion of another exemplary power converter system that may be used with the power generation system shown in FIG. 1.
FIGS. 5A and 5B illustrate various embodiments of interleaving PWM signals that can be used to control the switches of parallel inverter bridges of a phase of the power generation system shown in FIG. 1; and
FIG. 6 is a schematic diagram of a portion of another exemplary power converter system that may be used with power generation system shown in FIG. 1.

Wherever possible, the same reference numbers will be used throughout the drawings to represent the same parts.

Before the present methods and systems are disclosed and described, it is to be understood that the methods and systems are not limited to specific synthetic methods, specific components, or to particular compositions. It is also to be understood that the terminology used herein is for describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers or steps. "Exemplary" means "an example of" and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the examples included therein and to the Figures and their previous and following description.

As described herein, a power generation system includes a power converter system and at least one power generation unit. The power generation unit can be a renewable energy power generation unit that generates power from a renewable energy source. Such renewable energy sources may include wind, solar, geothermal, hydro, biomass, and/or any other renewable energy source. The power converter system includes a converter coupled to the power generation unit, and an inverter coupled to the converter by a DC bus. The inverter is coupled to an electrical distribution network for supplying electrical energy to the network. A control system controls the operation of the converter and the inverter. The inverter can be a poly-phase apparatus. For example, the inverter can include three inverter phases, each phase including a plurality of parallel bridges. Each bridge can be comprised of two or more switches coupled together in series. Each inverter phase is coupled to a separate inductor, and each inductor includes a plurality of windings positioned about a common core. An output of each bridge is coupled to a separate winding of the inductor. As such, the power converter systems described herein provides a high effective inductance for filtering power provided to an electrical distribution network while reducing a cost of the inductors used within the power converter systems. Furthermore, the power converter systems described herein provide control schemes for effectively sharing current between parallel bridges.

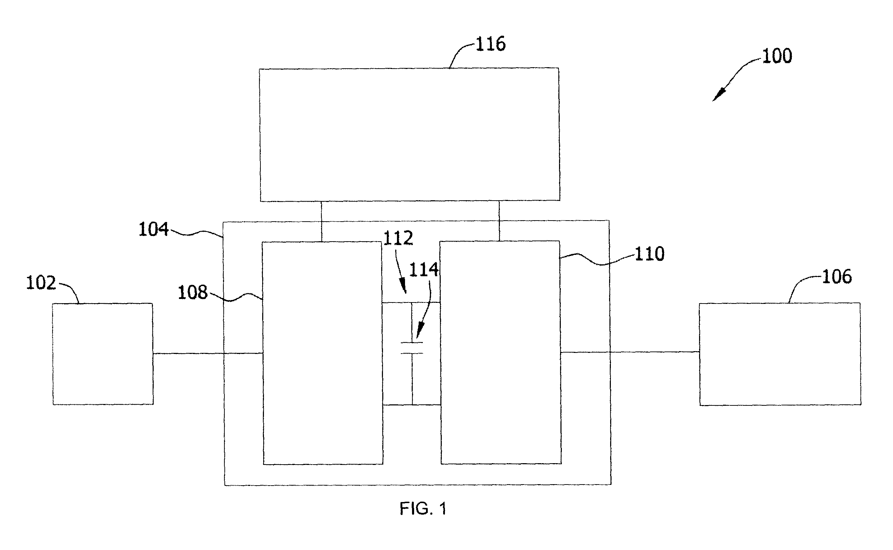

FIG. 1 is a schematic diagram of an exemplary power generation system 100 that includes at least one power generation unit 102. Power generation unit 102 includes a wind turbine, a solar panel or array, a fuel cell, a geothermal generator, a hydropower generator, and/or any other device that generates electrical power. More specifically, in the exemplary embodiment, power generation unit 102 can be a device that generates direct current (DC) electrical power from at least one renewable energy source. Alternatively, power generation unit 102 is a gas turbine, a steam turbine, and/or any other device that generates DC or alternating current (AC) power from a renewable or non-renewable energy source.

In the exemplary embodiment, power generation unit 102 is coupled to a power converter system 104, or a power converter 104. DC power generated by power generation unit 102 is transmitted to power converter system 104, and power converter system 104 converts the DC power to AC power. The AC power is transmitted to an electrical distribution network 106, or "grid." Power converter system 104, in the exemplary embodiment, adjusts an amplitude of the voltage and/or current of the converted AC power to an amplitude suitable for electrical distribution network 106, and provides AC power at a frequency and a phase that are substantially equal to the frequency and phase of electrical distribution network 106. Moreover, in the exemplary embodiment, power converter system 104 provides three phase AC power to electrical distribution network 106. Alternatively, power converter system 104 provides single phase AC power or any other number of phases of AC power to electrical distribution network 106.

In the exemplary embodiment, power converter system 104 includes a DC to DC, or "boost," converter 108 and an inverter 110 coupled together by a DC bus 112. Alternatively, power converter system 104 may include an AC to DC converter 108 for use in converting AC power received from power generation unit 102 to DC power, and/or any other converter 108 that enables power converter system 104 to function as described herein. In one embodiment, power converter system 104 does not include converter 108, and inverter 110 is coupled to power generation unit 102 by DC bus 112 and/or by any other device or conductor. In the exemplary embodiment, inverter 110 is a DC to AC inverter 110 that converts DC power received from converter 108 into AC power for transmission to electrical distribution network 106. Moreover, in the exemplary embodiment, DC bus 112 includes at least one capacitor 114. Alternatively, DC bus 112 includes a plurality of capacitors 114 and/or any other electrical power storage devices that enable power converter system 104 to function as described herein. As current is transmitted through power converter system 104, a voltage is generated across DC bus 112 and energy is stored within capacitors 114.

Power converter system 104 includes a control system 116 coupled to converter 108 and/or to inverter 110. In the exemplary embodiment control system 116 includes and/or is implemented by at least one processor. As used herein, the processor includes any suitable programmable circuit such as, without limitation, one or more systems and microcontrollers, microprocessors, reduced instruction set circuits (RISC), application specific integrated circuits (ASIC), programmable logic circuits (PLC), field programmable gate arrays (FPGA), and/or any other circuit capable of executing the functions described herein. The above examples are exemplary only, and thus are not intended to limit in any way the definition and/or meaning of the term "processor."

In the exemplary embodiment, control system 116 controls and/or operates converter 108 to adjust or maximize the power received from power generation unit 102. Moreover, in the exemplary embodiment, control system 116 controls and/or operates inverter 110 to regulate the voltage across DC bus 112 and/or to adjust the voltage, current, phase, frequency, and/or any other characteristic of the power output from inverter 110 to substantially match the characteristics of electrical distribution network 106.

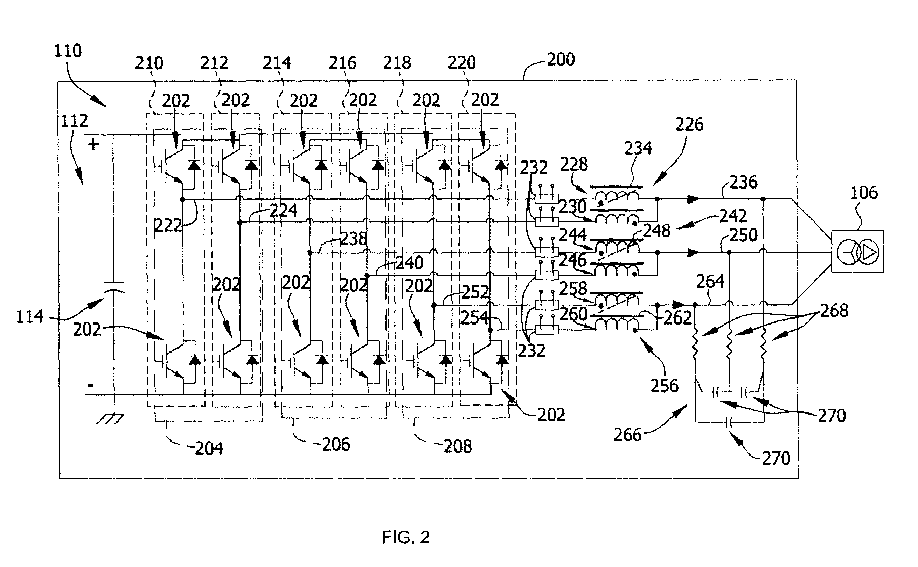

FIG. 2 is a schematic diagram of a portion of an exemplary power converter system 200 that may be used with power generation system 100 (shown in FIG. 1). In the exemplary embodiment, inverter 110 includes four inverter switches 202 coupled together for each phase of electrical power that power converter system 200 produces. Alternatively, inverter 110 includes any suitable number of inverter switches 202 for each phase of electrical power that enables inverter 110 and/or power converter system 200 to function as described herein. In the exemplary embodiment, inverter switches 202 are insulated gate bipolar transistors (IGBTs). Alternatively, inverter switches 202 are any other suitable transistor or any other suitable switching device.

In the exemplary embodiment, inverter 110 includes a first inverter phase 204, a second inverter phase 206, and a third inverter phase 208. First inverter phase 204 provides AC power corresponding to a first phase of electrical distribution network 106, second inverter phase 206 provides AC power corresponding to a second phase of electrical distribution network 106, and third inverter phase 208 provides AC power corresponding to a third phase of electrical distribution network 106. Moreover, in the exemplary embodiment, first inverter phase 204 includes a first phase first bridge 210 and a first phase second bridge 212. Each of first phase first bridge 210 and first phase second bridge 212 includes two inverter switches 202 coupled together in series. The series-coupled inverter switches 202 of first phase first bridge 210 are coupled in parallel with the series-coupled inverter switches 202 of first phase second bridge 212 (i.e., first phase first bridge 210 is coupled in parallel with first phase second bridge 212).

Each of second inverter phase 206 and third inverter phase 208 are configured in a similar manner to first inverter phase 204. Accordingly, second inverter phase 206 includes a second phase first bridge 214 coupled in parallel with a second phase second bridge 216, and third inverter phase 208 includes a third phase first bridge 218 coupled in parallel with a third phase second bridge 220. Each of second phase first bridge 214, second phase second bridge 216, third phase first bridge 218, and third phase second bridge 220 includes two inverter switches 202 coupled together in series. Alternatively, first inverter phase 204, second inverter phase 206, and/or third inverter phase 208 may include any suitable number and/or configuration of bridges and/or inverter switches 202.

In the exemplary embodiment, a first phase first conductor 222 is coupled between the two inverter switches 202 of first phase first bridge 210 and a first phase second conductor 224 is coupled between the two inverter switches 202 of first phase second bridge 212. First phase first conductor 222 transmits current from first phase first bridge 210 to a first inductor 226 that includes a first winding 228 and a second winding 230. As used herein, a "winding" includes at least one conductor arranged in one or more loops or "turns" such that the winding is substantially shaped as a coil.

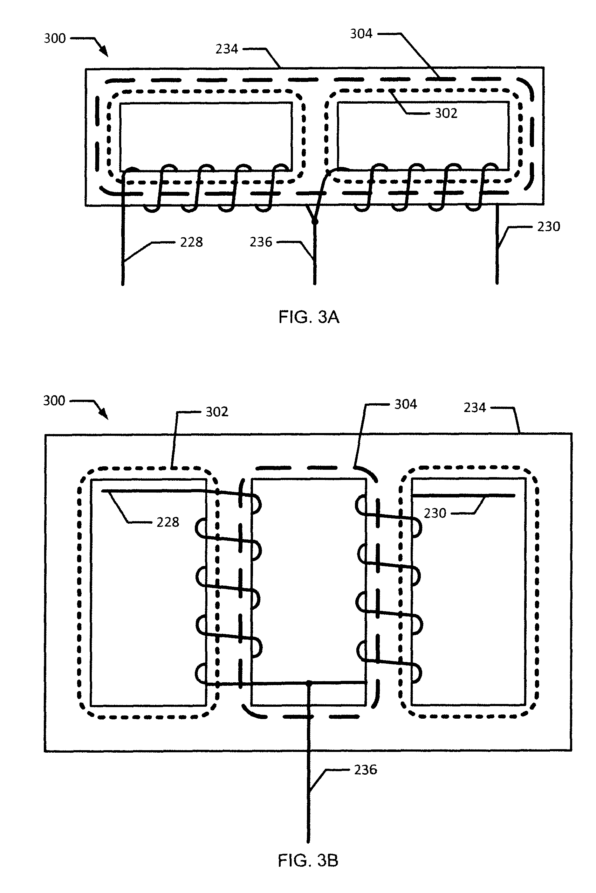

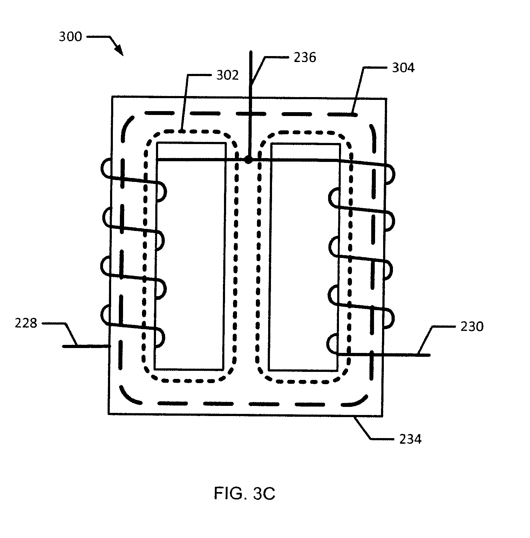

In the exemplary embodiment, first phase first conductor 222 is coupled to first winding 228 of first inductor 226. A current sensor 232 is coupled to first phase first conductor 222 for use in measuring the current transmitted through conductor 222 and through first winding 228. First phase second conductor 224 transmits current from first phase second bridge 212 to second winding 230. A current sensor 232 is coupled to first phase second conductor 224 for use in measuring the current transmitted through conductor 224 and through second winding 230. Moreover, first winding 228 and second winding 230 are positioned about a common inductor core 234 such that first winding 228 and second winding 230 are magnetically coupled to inductor core 234 when current is transmitted through first winding 228 and second winding 230. While FIG. 2 illustrates inductor core 234 separated into two components, this is merely for clarity of illustration. In the exemplary embodiment, inductor core 234 is a single continuous metal or metallic structure, and first winding 228 and second winding 230 are positioned about separate sections or portions of inductor core 234. As such, the dotted lines shown in FIG. 2 indicate that each section of inductor core 234 is connected to, and formed integrally with, each other section. An output of first winding 228 and an output of second winding 230 are coupled to a first phase output conductor 236 that transmits current from first winding 228 and second winding 230 to electrical distribution network 106. Additional inductor cores and windings are illustrated in a similar manner in FIGS. 3A, 3B and 3C, described herein.

A second phase first conductor 238 is coupled between the two inverter switches 202 of second phase first bridge 214 and a second phase second conductor 240 is coupled between the two inverter switches 202 of second phase second bridge 216. Second phase first conductor 238 transmits current from second phase first bridge 214 to a second inductor 242 that includes a first winding 244 and a second winding 246. More specifically, second phase first conductor 238 is coupled to first winding 244 of second inductor 242. A current sensor 232 is coupled to second phase first conductor 238 for use in measuring the current transmitted through conductor 238 and through first winding 244. Second phase second conductor 240 transmits current from second phase second bridge 216 to second winding 246. A current sensor 232 is coupled to second phase second conductor 240 for use in measuring the current transmitted through conductor 240 and through second winding 246. Moreover, first winding 244 and second winding 246 are positioned about a common inductor core 248 such that first winding 244 and second winding 246 are magnetically coupled to inductor core 248 when current is transmitted through first winding 244 and second winding 246. An output of first winding 244 and an output of second winding 246 are coupled to a second phase output conductor 250 that transmits current from first winding 244 and second winding 246 to electrical distribution network 106.

In the exemplary embodiment, a third phase first conductor 252 is coupled between the two inverter switches 202 of third phase first bridge 218 and a third phase second conductor 254 is coupled between the two inverter switches 202 of third phase second bridge 220. Third phase first conductor 252 transmits current from third phase first bridge 218 to a third inductor 256 that includes a first winding 258 and a second winding 260. More specifically, third phase first conductor 252 is coupled to first winding 258 of third inductor 256. A current sensor 232 is coupled to third phase first conductor 252 for use in measuring the current transmitted through conductor 252 and through first winding 258. Third phase second conductor 254 transmits current from third phase second bridge 220 to second winding 260. A current sensor 232 is coupled to third phase second conductor 254 for use in measuring the current transmitted through conductor 254 and through second winding 260. Moreover, first winding 258 and second winding 260 are positioned about a common inductor core 262 such that first winding 258 and second winding 260 are magnetically coupled to inductor core 262 when current is transmitted through first winding 258 and second winding 260. An output of first winding 258 and an output of second winding 260 are coupled to a third phase output conductor 264 that transmits current from first winding 258 and second winding 260 to electrical distribution network 106.

In one aspect, the power converter system 200 include one or more magnetic components 226, 242, 256 capable of suppressing the current flowing between the parallel bridges (e.g., 210 and 212, 214 and 216, 218 and 220, etc.) of the converter 200. This current is primarily high frequency current, at the switching frequency of the switches 202 and above, because generally the parallel bridges are working together to produce a similar fundamental current. Typically the switching frequency may be in the range of 1.0KHz to 10KHz, and in contrast, the typical fundamental frequency may be at or below 600Hz. This high frequency current flowing between the parallel bridges (e.g., 210 and 212, 214 and 216, 218 and 220, etc.) can be limited by the inductance between the parallel bridges, commonly known as differential mode inductance. Therefore, it is desired that the magnetic component 226, 242, 256 be capable of providing a differential mode inductance which is acted upon primarily by a high frequency current. As such, the magnetic core providing this differential mode inductance should be a core type that has low losses at relatively high frequency. Such cores are generally more expensive than cores with higher losses at relatively high frequency. This makes it desirable to minimize the amount of core material which is providing this differential mode inductance, in order to optimize the cost of the magnetic component.

Embodiments of the magnetic component 226, 242, 256 must also be able to provide a common mode inductance. This can be thought of as an inductance that exists when parallel bridges (e.g., 210 and 212, 214 and 216, 218 and 220, etc.) are working together to produce a similar current, the relatively low frequency fundamental current. This common mode inductance is able to help filter the similar fundamental current being provided by the parallel bridges. Because the current being filtered by the common mode inductance has a high content of low frequency current, it is desirable to utilize lower cost core material in this area of the magnetic component. Note the terms differential and common mode inductance described herein may be described differently in other literature, and possibly even interchanged, depending upon the way they are defined.

There are numerous physical shapes/arrangements of the core/coil to allow for both a magnetic path for common mode inductance and a different magnetic path for differential mode inductance. Three different example physical shapes/arrangements of embodiments of the magnetic component are shown in FIGS. 3A, 3B and 3C. Though FIGS. 3A, 3B and 3C show the core 234 and windings 228, 230 for only one phase of the power converter system 200 of FIG. 2, it is to be appreciated that similar core and winding configurations are equally applicable to the other phases of the power converter system 200. Each magnetic structure 300 in FIGS. 3A, 3B and 3C illustrate two different magnetic paths: the first path 302 creates the differential mode inductance and the second magnetic path(s) 304 create the common mode inductance as described herein. Air gaps in each leg (not shown) can be used to control the level of inductance for each path 302, 304. The inductance is based on standard formulas based on number of turns, core area, and air gap length. Clearly the path lengths are much different for the two example configurations, demonstrating how mechanical variations can impact the amount of each different core material. In one aspect, the cores 234 are comprised of a singular material. In other aspect, the cores 234 can be comprised of different materials to lower core losses and to lower costs. For example, the core of FIG. 3B may be comprised of three different materials - a first material for the parts of the core 234 through which the first path 302 (differential mode inductance) traverses, a second material for the parts of the core 234 through which the second path 304 (common mode inductance) traverses, and a third material for parts of the core 234 through which the first path 302 and the second path 304 traverse. Similarly, as another example, the cores 234 of FIGS. 3A and 3C may be comprised of only two materials - a first material for the parts of the core 234 through which only the first path 302 traverses and a second material for the parts of the core 234 through which the first path 302 and the second path 304 traverse. It is to be appreciated that FIGS. 3A, 3B and 3C illustrate only three examples of core and winding configurations and are not intended to limit embodiments of this invention to any particular physical shapes/arrangements.

Referring back to FIG. 2, in one aspect an AC filter 266 is coupled to first phase output conductor 236, second phase output conductor 250, and third phase output conductor 264 for use in filtering and/or removing undesired frequency components from the current transmitted through conductors 236, 250, and 264. AC filter 266 includes at least one resistor 268 coupled to each of first phase output conductor 236, second phase output conductor 250, and/or third phase output conductor 264. Moreover, AC filter 266 includes at least one capacitor 270 coupled between first phase output conductor 236 and second phase output conductor 250, between second phase output conductor 250 and third phase output conductor 264, and/or between first phase output conductor 236 and third phase output conductor 264. Alternatively, AC filter 266 may include any suitable configuration of resistors 268 and/or capacitors 270 that enables AC filter 266 to function as described herein.

In the exemplary embodiment, three phase AC power is provided to electrical distribution network 106 by inverter 110. More specifically, a first phase of AC power is supplied to electrical distribution network 106 by first phase output conductor 236, a second phase of AC power is supplied to network 106 by second phase output conductor 250, and a third phase of AC power is supplied to network 106 by third phase output conductor 264.

During operation, in the exemplary embodiment, power generation unit 102 (shown in FIG. 1) generates DC power and transmits or channels the DC power to converter 108. Control system 116 controls and/or operates converter 108, for example, by adjusting the voltage and/or current received from power generation unit 102 such that the power received from power generation unit 102 is increased and/or maximized. The DC power is channeled through inverter 110, i.e., through first inverter phase 204, second inverter phase 206, and/or third inverter phase 208. Moreover, in the exemplary embodiment, control system 116 controls a switching of inverter switches 202 to adjust an output of inverter 110. More specifically, control system 116 uses a suitable control algorithm, such as pulse width modulation (PWM) and/or any other control algorithm, to transform the DC power received from converter 108 into three phase AC power signals. Alternatively, control system 116 causes inverter 110 to transform the DC power into a single phase AC power signal or any other signal that enables power converter system 200 to function as described herein.

In the exemplary embodiment, control system 116 switches or operates inverter switches 202 of each inverter phase in a complementary or interleaved manner. More specifically, control system 116 transmits switching control signals to inverter switches 202 of first phase first bridge 210 and to inverter switches 202 of first phase second bridge 212 such that inverter switches 202 of first phase first bridge 210 have a duty cycle offset by about 180 degrees as compared to a duty cycle of inverter switches 202 of first phase second bridge 212. In one embodiment, if first inverter phase 204 includes three bridges coupled together in parallel, the duty cycle of inverter switches 202 of each bridge are offset by about 120 degrees with respect to each other. Alternatively, inverter switches 202 of first inverter phase 204 (i.e., of first phase first bridge 210 and of first phase second bridge 212) may be controlled by control system 116 in any suitable manner that enables inverter 110 to function as described herein. In the exemplary embodiment, control system 116 operates inverter switches 202 of second inverter phase 206 and of third inverter phase 208 in a similar manner as first inverter phase 204, although the duty cycle of inverter switches 202 of second inverter phase 206 and/or of third inverter phase 208 may be offset with respect to each other and/or with respect to first inverter phase 204. Such an interleaved switching of inverter switches 202 facilitates reducing a voltage ripple and/or a current ripple that may otherwise be generated as a result of the conversion of the DC power to AC power by inverter 110.

Current is transmitted or channeled from first inverter phase 204, second inverter phase 206, and third inverter phase 208 to first inductor 226, second inductor 242, and third inductor 256, respectively. First inductor 226, second inductor 242, and third inductor 256 facilitate reducing the voltage ripple and/or the current ripple generated by inverter 110. Moreover, the common core and multiple winding structure of first inductor 226, second inductor 242, and third inductor 256 facilitates providing a high effective inductance to the current transmitted through inductors 226, 242, and 258, while reducing a size of inductor cores 234, 248, and 262. Accordingly, using first inductor 226, second inductor 242, and third inductor 256 within power converter system 200 is more cost-effective as compared to using known inductors that do not include a common core and multiple winding structures.

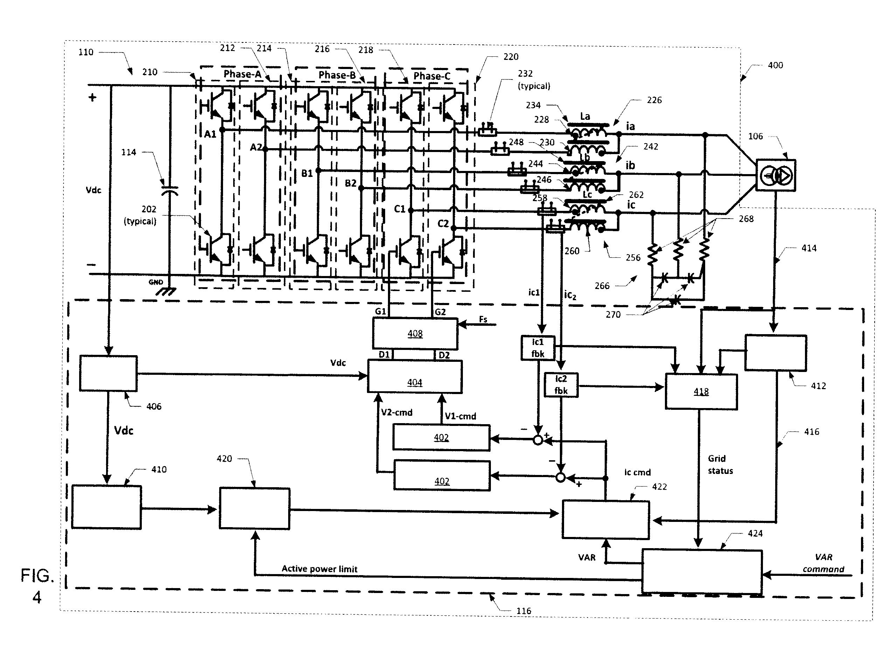

FIG. 4 is a schematic diagram of a portion of another exemplary power converter system 400 that may be used with power generation system 100 (shown in FIG. 1). Unless otherwise specified, power converter system 400 is substantially similar to power converter system 200 (shown in FIG. 2). Components of FIG. 4 that are similar to components of FIG. 2 are illustrated with the same reference numerals in FIG. 4 as are used in FIG. 2. A typical three-phase DC-to-AC inverter is shown in FIG. 4, where each phase has two bridges 210, 212, 214, 216, 218, 220 feeding two coupled windings 228, 230, 244, 246, 258, 260 of a coupled-inductor 226, 242, 256 on the same core 234, 248, 262. FIG. 4 also illustrates an embodiment of a control system 116 for the inverter system 400, though only one phase of the control system 116 is shown for clarity. As described herein, a three-phase L-C filter 266 can be formed using the three coupled-inductors 226, 242, 256 and three capacitor branches 270 with damping resistors 268. The L-C filter 266 provides an interface between the inverter 110 and ac utility grid 106.

Also as described herein, an input of the inverter 110 takes a DC voltage with a DC-link capacitor bank 114 as energy storage and filtering buffer. Each inverter phase (phase-A, phase-B, phase-C, etc.) has two parallel bridges 210, 212, 214, 216, 218, 220 that convert DC voltage into AC voltage output at the coupled inductor windings. Generally, there are two current sensors 232 for each inverter phase bridge 210, 212, 214, 216, 218, 220. For example, phase-C has two current sensors 232, each winding 258, 260 of the coupled inductor 256 having its own current sensor. By splitting the current sensors 232 between each inverter bridge 218, 220 of a phase (e.g., phase C), current sharing between the bridges can be enhanced.

Based on two current sensors 232 feedback, there are two current regulator loops built in the control system 116 (one loop for each current sensor 232 of a phase). Each current regulator 402 compares current feedback from the current sensors 232 to its command value, and adjusts a phase voltage command for a PWM modulator 404 in order to drive current error toward zero. The main function of PWM modulator block 404 is to compute the duty cycle from the phase voltage command (received from the current regulator 402) and Vdc voltage reading 406. The PWM modulator block 404 also provides a limiter function for over modulation or PWM saturation.

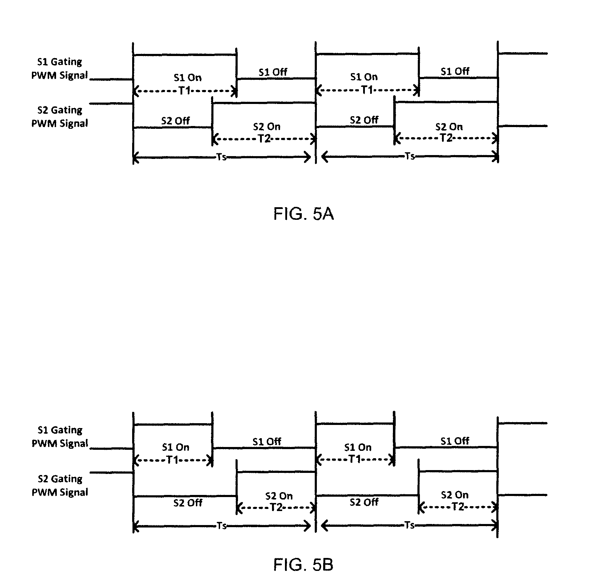

A PWM interleaving block 408 generates interleaved PWM signals driving the switches 202 of parallel inverter bridges 218, 220 of a phase (e.g., phase C). In various aspects, the output interleaving PWM signals can look like the waveforms shown in FIGS. 5A (duty cycle > 50%) and 5B (duty cycle < 50%), where S1 are the series switches of one parallel inverter bridge 208 of a phase and S2 are the series switches of the other parallel inverter bridge 210 of the phase.

Returning to FIG. 4, typically an inverter controller 116 can also be comprised of a Vdc voltage regulator 410. The purpose of the Vdc voltage regulator 410 is to coordinate the Vdc voltage status with the up-level power flow control 420. A grid-tied AC inverter normally runs a phase-lock-loop 412 in the controller 116, so that it can monitor the grid AC voltage 414 and track the grid voltage phase angle in real time. PLL 412 also provides the means for reactive power or power factor control.

PLL 412 can also provide AC grid frequency measurement and phase output 416. AC grid phase angle 416 can be used by the inverter sync controller 422 as the phase reference for the rotating coordinate when calculating internal feedback variables and current and voltage and power regulators.

PLL 412 also provides basic information on the AC grid voltage and frequency, which are among other important data used by the grid condition monitor block 418. In one aspect, the grid monitor 418 processes the AC grid 106 and inverter system 400 operating data and makes decisions if it appears that the AC grid 106 or inverter system 400 may be faulted. In case of fault or loss of the AC grid 106, the grid monitor 416 can also switch the PLL 412 to special state in order to help ride through the grid fault events. In one aspect, a VAR regulator and ride-through control 424 also coordinates real power vs. reactive power flow control during grid fault events. For example, the inverter system 400 can draw significant reactive current from the grid 106 during a high-voltage ride through (HVRT) event, where ac grid voltage can go as much as 140% over nominal.

In summary, the control system 116 of FIG. 4 comprises a first current sensor 232 and a second current sensor 232 for each phase of the power converter system 400. For non-limiting example purposes only and referring to phase C, the first winding 258 of the inductor 256 has a first current sensor 232 and the second winding 260 of the inductor 256 has a second current sensor 232. This embodiment of the control system 116 comprises the first 232 and the second current sensors 232 coupled to a first current feedback control loop and a second feedback control loop, respectively. The first current feedback control loop is comprised of a first current regulator 402 that actively adjusts the first duty cycle of the switches 202 that comprise a first bridge 218 of the parallel bridges 218, 220 of a phase and the second current feedback control loop is comprised of a second current regulator 402 that actively adjusts the second duty cycle of the switches 202 that comprise a second bridge 220 of the parallel bridges 218, 220 of a phase. It is to be appreciated that referring to phase C is for non-limiting example purposes only and that each phase of the power converter system 600 has two current sensors each couple to a first and a second current feedback control loop, respectively, and that each current feedback control loop is comprised of a current regulator 402 that actively adjusts the duty cycle of switches 202 that comprise a first bridge or a second bridge of the parallel bridges of a phase

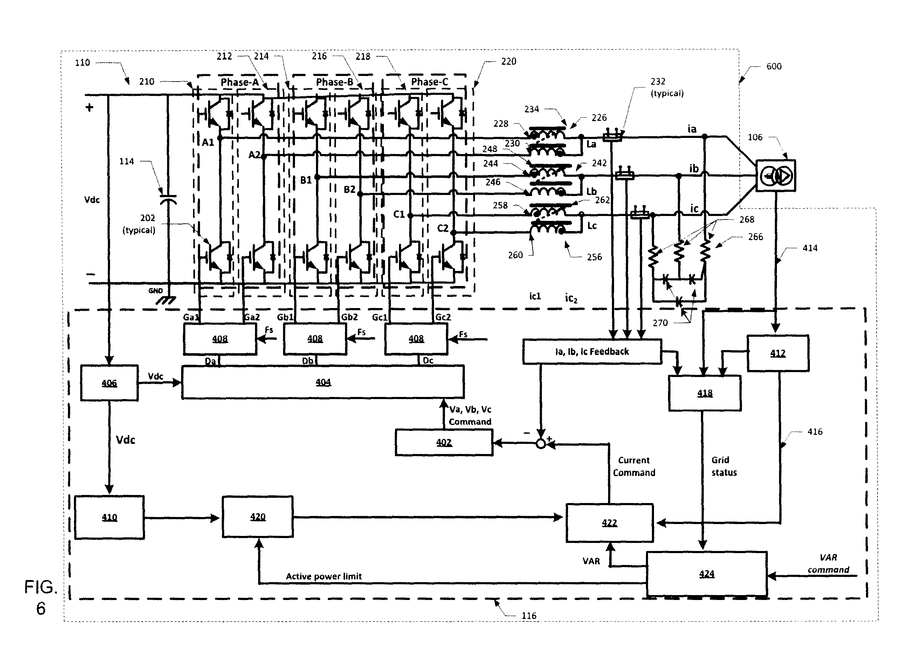

FIG. 6 illustrates an alternative embodiment of the control system 116 shown in FIG. 4. FIG. 6 is a schematic diagram of a portion of another exemplary power converter system 600 that may be used with power generation system 100 (shown in FIG. 1). Unless otherwise specified, power converter system 600 is substantially similar to power converter system 200 (shown in FIG. 2) and power converter system 400 (shown in FIG. 4). Components of FIG. 6 that are similar to components of FIG. 2 and FIG. 4 are illustrated with the same reference numerals in FIG. 6 as are used in FIG. 2 and FIG. 4. In this embodiment, a reduced count of current sensors 232 for a coupled-inductor inverter system 600 can utilize the coupled-inductor property to overcome current imbalance. The coupled parallel branches (e.g., 208, 210, etc.) of each inverter phase share only one current sensor 232, and only one current control loop is formed for each inverter phase. Because of the reduced number of current sensors 232, costs can be reduced for the system 600. In the embodiment shown in FIG. 6, and considering only one phase (e.g., C phase), the first winding 258 of the inductor 256 and the second winding 260 of the inductor 256 have a single current sensor 232. The control system 116 comprises the single current sensor 232 for a phase coupled to a single current feedback control loop having a single current regulator 402 that actively adjusts the first duty cycle and the second duty cycle of the switches 202 that comprise the parallel bridges 218, 220 of a phase. It is to be appreciated that referring to phase C is for non-limiting example purposes only and that each phase of the power converter system 600 has a single current sensor coupled to a single current feedback control loop having a single current regulator that actively adjusts the first duty cycle and the second duty cycle of the switches 202 that comprise the parallel bridges of a phase.

Various technical effects of the systems and methods described herein may include at least one of: (a) receiving direct current (DC) power; (b) channeling DC power through an inverter including a first bridge and a second bridge, wherein each of the first bridge and the second bridge includes at least one switch; (c) controlling at least one switch of a first bridge and at least one switch of a second bridge to convert DC power to alternating current (AC) power; and (d) channeling AC power through an inductor that includes a first winding and a second winding, wherein the first winding is coupled to an output of a first bridge and the second winding is coupled to an output of a second bridge.

The above-described embodiments may facilitate providing an efficient and cost-effective power converter system for use within a power generation system. The power converter system includes a converter configured to be coupled to a power generation unit, and an inverter coupled to the converter by a DC bus. The inverter is configured to be coupled to an electrical distribution network for supplying electrical energy to the network. A control system controls the operation of the converter and the inverter. The inverter includes three inverter phases that each includes a plurality of bridges. Each bridge includes two switches coupled together in series. Each inverter phase is coupled to a separate inductor, and each inductor includes a plurality of windings positioned about a common core. An output of each bridge is coupled to a separate winding of the inductor. As such, the power converter systems described herein provide a high effective inductance for filtering power provided to an electrical distribution network while reducing a cost of the inductors used within the power converter systems.

Exemplary embodiments of a power generation system, a power converter system, and methods for converting power are described above in detail. The power generation system, power converter system, and methods are not limited to the specific embodiments described herein, but rather, components of the power generation system and/or power converter system and/or steps of the methods may be utilized independently and separately from other components and/or steps described herein. For example, the power converter system may also be used in combination with other power systems and methods, and is not limited to practice with only the power generation system as described herein. Rather, the exemplary embodiment can be implemented and utilized in connection with many other renewable energy and/or power generation applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method of converting power, said method comprising:
   receiving direct current (DC) power;
   channeling the DC power through an inverter including a first bridge and a second bridge, wherein each of the first bridge and the second bridge includes at least one switch;
   controlling the at least one switch of the first bridge and the at least one switch of the second bridge to convert the DC power to alternating current (AC) power; and,
   channeling the AC power through an inductor that includes a first winding and a second winding, wherein the first winding is coupled to an output of the first bridge and the second winding is coupled to an output of the second bridge and wherein said inductor is configured to have a first magnetic path for common mode inductance and a second magnetic path for differential mode inductance.
2. The method of Clause 1, wherein the inductor includes an inductor core and the first winding and the second winding are positioned about the inductor core, wherein said channeling the AC power through an inductor comprises channeling the AC power through the first winding and the second winding.
3. The method of any preceding Clause, further comprising channeling the DC power through a converter to adjust the DC power.
4. The method of any preceding Clause, further comprising coupling an output of the first winding and an output of the second winding to an electrical distribution network to supply the AC power to the electrical distribution network.
5. The method of any preceding Clause, further comprising providing a first phase of the AC power to the electrical distribution network when the output of the first winding and the output of the second winding are coupled to the electrical distribution network.
6. The method of any preceding Clause, further comprising controlling the at least one switch of the first bridge to be switched with a first duty cycle and controlling the at least one switch of the second bridge to be switched with a second duty cycle, wherein the first duty cycle is different from the second duty cycle.
7. The method of any preceding Clause, wherein the first winding of the inductor has a first current sensor and the second winding of the inductor has a second current sensor and controlling the at least one switch of the first bridge to be switched with a first duty cycle and controlling the at least one switch of the second bridge to be switched with a second duty cycle comprises said first and said second current sensors coupled to a first current feedback control loop and a second feedback control loop, respectively, said first current feedback control loop having a first current regulator that actively adjusts said first duty cycle and said second current feedback control loop having a second current regulator that actively adjusts said second duty cycle.
8. The method of any preceding Clause, wherein the first winding of the inductor and the second winding of the inductor have a single current sensor and controlling the at least one switch of the first bridge to be switched with a first duty cycle and controlling the at least one switch of the second bridge to be switched with a second duty cycle comprises said single current sensor coupled to a single current feedback control loop having a single current regulator that actively adjusts said first duty cycle and said second duty cycle.
9. A method of converting power, said method comprising:
   receiving direct current (DC) power;
   channeling the DC power through an inverter including a first bridge and a second bridge, wherein each of the first bridge and the second bridge includes at least one switch;
   controlling the at least one switch of the first bridge and the at least one switch of the second bridge to convert the DC power to alternating current (AC) power by causing said at least one switch of said first bridge to be switched with a first duty cycle and to cause said at least one switch of said second bridge to be switched with a second duty cycle that is different from the first duty cycle, said controlling performed by a control system that comprises at least a first current sensor coupled to a first current feedback control loop, said first current feedback control loop having a first current regulator that actively adjusts said first duty cycle and said second duty cycle; and
   channeling the AC power through an inductor that includes a first winding and a second winding, wherein the first winding is coupled to an output of the first bridge and the second winding is coupled to an output of the second bridge.
10. The method of any preceding Clause, wherein the inductor includes an inductor core and the first winding and the second winding are positioned about the inductor core, wherein said channeling the AC power through an inductor comprises channeling the AC power through the first winding and the second winding.
11. The method of any preceding Clause, further comprising coupling an output of the first winding and an output of the second winding to an electrical distribution network to supply the AC power to the electrical distribution network.
12. The method of any preceding Clause, further comprising providing a first phase of the AC power to the electrical distribution network when the output of the first winding and the output of the second winding are coupled to the electrical distribution network.
13. The method of any preceding Clause, wherein controlling the at least one switch of the first bridge and the at least one switch of the second bridge comprises the control system further comprising a second current sensor coupled to a second current feedback control loop, said first current feedback control loop having the first current regulator that actively adjusts said first duty cycle and said second current feedback control loop having a second current regulator that actively adjusts said second duty cycle, wherein the first winding of the inductor is coupled to the first current sensor and the second winding of the inductor is coupled to the second current sensor.
14. The method of any preceding Clause, wherein channeling the AC power through an inductor that includes a first winding and a second winding comprises channeling the AC power through the inductor that is configured to have a first magnetic path for common mode inductance and a second magnetic path for differential mode inductance.
15. A power converter system, comprising:
   an inverter comprising a first bridge and a second bridge, wherein each of said first bridge and said second bridge comprises at least one switch;
   an inductor comprising:
      a first winding coupled to an output of said first bridge; and,
      a second winding coupled to an output of said second bridge; and
   a control system coupled to the inverter, said control system configured to cause said at least one switch of said first bridge to be switched with a first duty cycle and to cause said at least one switch of said second bridge to be switched with a second duty cycle, wherein the first duty cycle is different from the second duty cycle, said control system comprising at least a first current sensor coupled to a first current feedback control loop, said first current feedback control loop having a first current regulator that actively adjusts said first duty cycle and said second duty cycle.
16. The power converter system of any preceding Clause, wherein said power converter system is configured to receive power from at least one power generation unit, said power conversion system further comprising a converter coupled to said inverter and configured to adjust the power received.
17. The power converter system of any preceding Clause, wherein an output of said first winding and an output of said second winding are configured to be coupled to an electrical distribution network to provide a first phase of alternating current power to the electrical distribution network.
18. The power converter system of any preceding Clause, wherein said first bridge and said second bridge are coupled in parallel with each other.
19. The power converter system of any preceding Clause, wherein the control system further comprises a second current sensor coupled to a second current feedback control loop, said first current feedback control loop having the first current regulator that actively adjusts said first duty cycle and said second current feedback control loop having a second current regulator that actively adjusts said second duty cycle, wherein the first winding of the inductor is coupled to the first current sensor and the second winding of the inductor is coupled to the second current sensor.
20. The power converter system of any preceding Clause, wherein said inductor is configured to have a first magnetic path for common mode inductance and a second magnetic path for differential mode inductance.

## Claims

1. A method of converting power, said method comprising:
receiving direct current (DC) power;
channeling the DC power through an inverter (10) including a first bridge (210) and a second bridge (212), wherein each of the first bridge (210) and the second bridge (212) includes at least one switch (202);
controlling the at least one switch (202) of the first bridge (210) and the at least one switch of the second bridge (212) to convert the DC power to alternating current (AC) power; and
channeling the AC power through an inductor (226) that includes a first winding (228) and a second winding (230), wherein the first winding is coupled to an output of the first bridge (210) and the second winding is coupled to an output of the second bridge (212) and wherein said inductor is configured to have a first magnetic path for common mode inductance and a second magnetic path for differential mode inductance.

2. The method of Claim 1, wherein the inductor (226) includes an inductor core and the first winding and the second winding are positioned about the inductor core, wherein said channeling the AC power through an inductor comprises channeling the AC power through the first winding and the second winding.

3. The method of any preceding Claim, further comprising channeling the DC power through a converter (104) to adjust the DC power.

4. The method of any preceding Claim, further comprising coupling an output of the first winding (228) and an output of the second winding (230) to an electrical distribution network (106) to supply the AC power to the electrical distribution network.

5. The method of any preceding Claim, further comprising providing a first phase of the AC power to the electrical distribution network (106) when the output of the first winding (228) and the output of the second winding (230) are coupled to the electrical distribution network.

6. The method of any preceding Claim, further comprising controlling the at least one switch (202) of the first bridge (210) to be switched with a first duty cycle and controlling the at least one switch (202) of the second bridge (212) to be switched with a second duty cycle, wherein the first duty cycle is different from the second duty cycle.

7. The method of any preceding Claim, wherein the first winding (228) of the inductor (226) has a first current sensor (232) and the second winding of the inductor has a second current sensor and controlling the at least one switch of the first bridge to be switched with a first duty cycle and controlling the at least one switch of the second bridge to be switched with a second duty cycle comprises said first and said second current sensors coupled to a first current feedback control loop and a second feedback control loop, respectively, said first current feedback control loop having a first current regulator that actively adjusts said first duty cycle and said second current feedback control loop having a second current regulator that actively adjusts said second duty cycle.

8. The method of any preceding Claim, wherein the first winding (228) of the inductor and the second winding (230) of the inductor have a single current sensor and controlling the at least one switch of the first bridge to be switched with a first duty cycle and controlling the at least one switch of the second bridge to be switched with a second duty cycle comprises said single current sensor coupled to a single current feedback control loop having a single current regulator that actively adjusts said first duty cycle and said second duty cycle.

9. A method of converting power, said method comprising:
receiving direct current (DC) power;
channeling the DC power through an inverter (110) including a first bridge (210) and a second bridge (212), wherein each of the first bridge and the second bridge includes at least one switch (202);
controlling the at least one switch (202) of the first bridge and the at least one switch of the second bridge to convert the DC power to alternating current (AC) power by causing said at least one switch of said first bridge to be switched with a first duty cycle and to cause said at least one switch of said second bridge to be switched with a second duty cycle that is different from the first duty cycle, said controlling performed by a control system that comprises at least a first current sensor coupled to a first current feedback control loop, said first current feedback control loop having a first current regulator that actively adjusts said first duty cycle and said second duty cycle; and
channeling the AC power through an inductor (226) that includes a first winding and a second winding, wherein the first winding is coupled to an output of the first bridge and the second winding is coupled to an output of the second bridge.

10. A power converter system (100), comprising:
an inverter (110) comprising a first bridge (210) and a second bridge (212), wherein each of said first bridge and said second bridge comprises at least one switch (202);
an inductor (226) comprising:
a first winding (228) coupled to an output of said first bridge; and
a second winding (230) coupled to an output of said second bridge; and
a control system (116) coupled to the inverter (110), said control system (116) configured to cause said at least one switch (202) of said first bridge (210) to be switched with a first duty cycle and to cause said at least one switch (202) of said second bridge (212) to be switched with a second duty cycle, wherein the first duty cycle is different from the second duty cycle, said control system (116) comprising at least a first current sensor (232) coupled to a first current feedback control loop, said first current feedback control loop having a first current regulator (402) that actively adjusts said first duty cycle and said second duty cycle.

11. The power converter system (100) of Claim 10, wherein said power converter system is configured to receive power from at least one power generation unit (102), said power conversion system further comprising a converter (108) coupled to said inverter (110) and configured to adjust the power received.

12. The power converter system (100) of Claim 10 or Claim 11, wherein an output of said first winding (228) and an output of said second winding (230) are configured to be coupled to an electrical distribution network (106) to provide a first phase of alternating current power to the electrical distribution network.

13. The power converter system (100) of any of Claims 10 to 12, wherein said first bridge (210) and said second bridge (212) are coupled in parallel with each other.

14. The power converter system (100) of any of Claims 10 to 13, wherein the control system (116) further comprises a second current sensor (232) coupled to a second current feedback control loop, said first current feedback control loop having the first current regulator that actively adjusts said first duty cycle and said second current feedback control loop having a second current regulator that actively adjusts said second duty cycle, wherein the first winding (228) of the inductor (226) is coupled to the first current sensor (232) and the second winding (230) of the inductor (226) is coupled to the second current sensor (232).

15. The power converter system (100) of any of Claims 10 to 14, wherein said inductor (226) is configured to have a first magnetic path for common mode inductance and a second magnetic path for differential mode inductance.
